# EUROPEAN PATENT APPLICATION

(11) **EP 4 835 650 A1**
(43) Date of publication of application: **04.11.2026**
(21) Application number: 24910073.6
(22) Date of filing: 25.09.2024
(51) Int. Cl.: G06F 8/65, G06F 11/07

(54) **VEHICLE UPGRADING METHOD AND VEHICLE**

(30) Priority: 29.12.2023 CN 202311866584
(71) Applicant: Yinwang Intelligent Technologies Co., Ltd., Shenzhen, Guangdong 518110 (CN)
(72) Inventor: HUANG, Fengbiao, Shenzhen, Guangdong 518129 (CN); ZONG, Yajun, Shenzhen, Guangdong 518129 (CN); NI, Guoyu, Shenzhen, Guangdong 518129 (CN); YANG, Haiquan, Shenzhen, Guangdong 518129 (CN)
(74) Representative: Henselmann, Alexander Gerhard
(86) International application number: PCT/CN2024/121200
(87) International publication number: WO 2025/139129

(57) **Abstract**

A method for upgrading a vehicle and the vehicle are provided, which relate to the field of vehicle control technologies. The foregoing vehicle includes at least one controller that includes a first controller, and the foregoing method may be used in a case in which an upgrade of a controller fails in a process of upgrading the vehicle. In this case, the first controller may start a wake-up timing operation and control the vehicle to be powered off, and after the wake-up timing operation ends, the vehicle is powered on, and the first controller is woken up. Then, the first controller re-upgrades the at least one controller. In other words, the vehicle is re-upgraded. After the vehicle is powered on, the at least one controller may be reset, and a communication link re-established after the reset is usually normal. When the communication link is normal, a probability of successfully upgrading all controllers may also be increased.

## Description

This application claims priority to Chinese Patent Application No. 202311866584.6, filed with the China National Intellectual Property Administration on December 29, 2023 and entitled "METHOD FOR UPGRADING VEHICLE AND VEHICLE", which is incorporated herein by reference in its entirety.

### TECHNICAL FIELD

This application relates to the field of vehicle control technologies, and in particular, to a method for upgrading a vehicle and a vehicle.

### BACKGROUND

A vehicle includes a plurality of functional domains, for example, a cockpit domain, a body domain, a chassis domain, and a powertrain domain. Different functional domains may include different vehicle components of the vehicle, and the different functional domains each include corresponding functional domain controllers. The functional domain controller may control the vehicle component in the corresponding functional domain to implement some functions, and a cockpit domain controller may further control another functional domain controller, to implement functional coordination of the vehicle.

To improve functions and performance of the vehicle, fix vulnerabilities, or the like, vehicle over-the-air (over-the-air, OTA) upgrade may be performed during a power-on period of the vehicle. In an OTA process, the vehicle may obtain a new software package from a cloud server and install the new software package, to upgrade functions or performance of each functional domain controller of the vehicle. However, such a current upgrade manner may cause an upgrade failure in a part of the functional domain controllers due to a communication link exception.

### SUMMARY

This application provides a method for upgrading a vehicle and the vehicle, so that a probability of successfully upgrading the vehicle can be increased, and user experience can be improved.

To achieve the foregoing objective, the following technical solutions are used in this application.

According to a first aspect, a method for upgrading a vehicle is provided, and is applied to a first controller of the vehicle. The vehicle includes at least one controller that includes the first controller. In the method for upgrading the vehicle, the first controller upgrades the at least one controller, and when an upgrade of a controller fails in an upgrade process, the first controller starts a wake-up timing operation and controls the vehicle to be powered off, where the wake-up timing operation is used for timing, controlling the vehicle to be powered on when the timing ends, and waking up the first controller. Then, the first controller re-upgrades the at least one controller.

In the foregoing method, after the vehicle is powered off and then powered on, the at least one controller of the vehicle may be reset, and a communication link re-established after these controllers are reset is usually normal. When the communication link is normal, the first controller re-upgrades the at least one controller, so that a probability of successfully upgrading all controllers can also be increased. In addition, when the communication link is normal, the controller whose upgrade fails may also successfully respond to a diagnostic request, so that a success rate of diagnosing the controller is increased, a reason for an upgrade exception can be analyzed more accurately based on a diagnostic result, and a success rate of resolving an upgrade exception problem is also increased. In this way, a success rate of re-upgrading the controller whose upgrade fails is improved.

Resetting includes restarting, resetting, or re-flashing internal firmware, or another specific execution manner having a same function. This is not limited herein.

In this way, in the foregoing method provided in this application, after the vehicle is powered off and then powered on, an upgrade operation is re-performed on the at least one controller, so that a probability of successfully upgrading the controller can be increased, it is further ensured that a function or performance of the vehicle can be updated, and user experience is improved.

In an implementation of the first aspect, when the upgrade of the controller fails in the upgrade process, the first controller determines a vehicle status, and when the vehicle is in an armed state, the first controller starts the wake-up timing operation and controls the vehicle to be powered off.

In this implementation, because the armed state indicates that the vehicle is locked, when the vehicle is locked, it is highly likely that the vehicle is not started, and no user uses a central display screen inside the vehicle and operates a component of the vehicle. In this case, when the vehicle is in the armed state, the wake-up timing is started, and re-upgrade is performed after the timing ends, so that upgrade interruptions caused by vehicle startup, a user operation, and the like can be reduced, and it can be ensured that the vehicle is smoothly upgraded.

In an implementation of the first aspect, after the vehicle status is determined, when the vehicle is in a disarmed state, the first controller presents information indicating a failure in upgrading the vehicle.

In this implementation, the vehicle may be started or operated at any time in the disarmed state. Therefore, in the disarmed state, the first controller does not re-upgrade the vehicle, so that an upgrade interruption is reduced, and user experience is improved.

In an implementation of the first aspect, in a process of performing the wake-up timing operation, if the vehicle is switched from the armed state to the disarmed state, the first controller presents the information indicating the failure in upgrading the vehicle.

In this implementation, because the vehicle status changes, it cannot be ensured that the vehicle can be smoothly upgraded without interruption. Therefore, the first controller terminates a vehicle upgrade operation.

In an implementation of the first aspect, when the vehicle is in the armed state, the first controller may first obtain a first quantity of retries of an upgrade operation, where the first quantity of retries indicates a quantity of upgrade operations re-performed on the at least one controller. When the first quantity of retries is greater than zero, the first controller starts the wake-up timing operation and controls the vehicle to be powered off.

In this implementation, if the first quantity of retries is not zero, it indicates that a quantity of retries for upgrading the at least one controller (or referred to as upgrading the vehicle) is not used up. In this case, the upgrade operation may be retried, to increase the probability of successfully upgrading the controller. If the first quantity of retries is zero, it indicates that the quantity of retries for upgrading the at least one controller (or referred to as upgrading the vehicle) is used up. In this case, to avoid wasting unnecessary time caused by repeated retries, when the quantity of retries is used up, no retry is performed.

In an implementation of the first aspect, when the first quantity of retries is zero, the first controller presents the information indicating the failure in upgrading the vehicle, to prompt the user with the failure in upgrading the vehicle, so that the user can handle the failure independently or seek technical assistance.

In an implementation of the first aspect, in a process in which the first controller upgrades the at least one controller, when the vehicle meets a first preset condition, the first controller separately upgrades the at least one controller based on an obtained upgrade software package for upgrading the vehicle. The first preset condition includes one or more of the following: The vehicle is in a stationary state, the vehicle is not started, and a gear of the vehicle is a preset gear. When the at least one controller is successfully upgraded separately, the first controller presents information indicating a success in upgrading the vehicle.

In this implementation, the first preset condition may ensure that the vehicle is upgraded when the vehicle is in an appropriate state, so that impact on driving of the user or use of the vehicle by the user in a process of upgrading the vehicle is reduced.

In an implementation of the first aspect, for an upgrade of one controller, when the upgrade of the controller fails and the vehicle meets a second preset condition, the first controller obtains a second quantity of retries of an upgrade operation on the controller, where the second preset condition includes: the vehicle is in an unstartable state and/or the vehicle is in a state in which a vehicle door is not openable; and when the second quantity of retries is greater than zero, the controller is re-upgraded; or when the second quantity of retries is equal to zero, it is determined that the upgrade of the controller fails.

In this implementation, the second preset condition may prevent the vehicle from being re-upgraded when a serious fault or case occurs in the vehicle, reduce the quantity of retries, and save time.

According to a second aspect, a vehicle is provided. The vehicle includes at least one controller that includes a first controller.

The first controller is configured to: upgrade the at least one controller; and when an upgrade of a controller fails in an upgrade process, control a telematics box to start a wake-up timing operation and control the vehicle to be powered off, where the wake-up timing operation is used for timing, controlling the vehicle to be powered on when the timing ends, and waking up the first controller.

The first controller is further configured to re-upgrade the at least one controller.

According to a third aspect, a vehicle is provided, including a memory and one or more controllers. The memory is coupled to the controller. The memory stores computer program code. The computer program code includes computer instructions. When the computer instructions are executed by the controller, the vehicle is enabled to perform the method for upgrading the vehicle according to the first aspect and any one of the implementations of the first aspect.

According to a fourth aspect, a computer-readable storage medium is provided, including computer instructions. When the computer instructions are run on a vehicle, the vehicle is enabled to perform the method for upgrading the vehicle according to the first aspect and any one of the implementations of the first aspect.

According to a fifth aspect, a computer program product is provided. When the computer program product is run on a vehicle, the vehicle is enabled to perform the method for upgrading the vehicle according to the first aspect and any one of the implementations of the first aspect.

It may be understood that for beneficial effects that can be achieved by the vehicle according to the second aspect, the vehicle according to the third aspect, the computer-readable storage medium according to the fourth aspect, and the computer program product according to the fifth aspect, refer to the beneficial effects in any one of the first aspect and the possible design manners of the first aspect. Details are not described herein again.

### BRIEF DESCRIPTION OF DRAWINGS

FIG. 1 is a diagram 1 of a structure of a vehicle according to an embodiment of this application;
FIG. 2 is a diagram 2 of a structure of a vehicle according to an embodiment of this application;
FIG. 3A and FIG. 3B are a schematic flowchart 1 of upgrading a vehicle according to an embodiment of this application;
FIG. 4 is a schematic flowchart 2 of upgrading a vehicle according to an embodiment of this application;
FIG. 5 is a diagram of "four doors and two covers" of a vehicle according to an embodiment of this application;
FIG. 6 is a diagram of content displayed on a central display screen according to an embodiment of this application;
FIG. 7A to FIG. 7C are a schematic flowchart 3 of upgrading a vehicle according to an embodiment of this application; and
FIG. 8 is a diagram 3 of a structure of a vehicle according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, "a plurality of" means two or more unless otherwise specified. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions and purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" indicate giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, service scenarios described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to similar technical problems with emergence of new service scenarios.

Currently, most vehicles have a plurality of controllers to control different vehicle components, to implement a plurality of functions. For example, the vehicle may include a plurality of functional domains, for example, a cockpit domain, a body domain, a chassis domain, a powertrain domain, and an advanced driver assistance system domain. Different functional domains may include different vehicle components and respective controllers (electronic control unit, ECU) of the vehicle.

For example, the powertrain domain includes an engine, a motor, a generator, a power battery, and a transmission, and may further include a powertrain domain controller. The body domain may include a headlight, a taillight, an interior light, a door lock, a vehicle window, a sunroof, a windshield wiper, a power trunk, a smart key, an air conditioner, an antenna, gateway communication, and the like, and may further include a body domain controller. The chassis domain may include a suspension system, a steering system, a braking system, and the like, and may further include a chassis domain controller. The cockpit domain may include internal apparatuses such as a center console, a seat, and an air conditioner, and may further include a cockpit domain controller. The advanced driver assistance system domain may include vehicle components related to autonomous driving such as a sensor, and may further include an advanced driver assistance system domain controller.

In addition, the cockpit domain controller may also control another functional domain controller, to implement functional coordination of the vehicle.

To improve functions and performance of the vehicle, fix vulnerabilities, or the like, vehicle over-the-air upgrade, for example, OTA, may be performed during a power-on period of the vehicle. In an OTA process, the vehicle may obtain a new software package from a cloud server and install the new software package, to upgrade functions or performance of each functional domain controller of the vehicle.

During the OTA, if an upgrade of a specific controller fails, the controller needs to be restarted and the upgrade is retried. However, after the controller is restarted during the power-on period of the vehicle, a problem, for example, link downtime or a link exception, may occur on a communication link between the controller and a gateway. This affects a re-upgrade of the controller and still results in a failure of a controller upgrade. In addition, because the problem occurs on the communication link, the controller cannot respond to a diagnostic request of another controller or server for the controller. As a result, the another controller or server cannot diagnose an upgrade exception of the controller, and cannot analyze a reason for the upgrade exception. Consequently, the upgrade exception of the controller cannot be resolved, still resulting in the failure of the controller upgrade.

If there is the upgrade failure of the controller in the vehicle, a function or performance update of the vehicle is affected, and user experience is affected.

Based on the foregoing content, an embodiment of this application provides a method for upgrading a vehicle. The method may be applied to a first controller of the vehicle, and the vehicle includes at least one controller that includes the first controller. In the method for upgrading the vehicle, the first controller first upgrades the at least one controller. When an upgrade of a controller fails in an upgrade process, the first controller starts a wake-up timing operation and controls the vehicle to be powered off. The wake-up timing operation is used for timing, controlling the vehicle to be powered on when the timing ends, and waking up the first controller. Then, the first controller re-upgrades the at least one controller.

In the foregoing method, when the upgrade of the controller fails in the process of upgrading the vehicle, the first controller may control the vehicle to be powered off, to reset the controller in the vehicle. After the vehicle is powered on again, the reset first controller re-performs an upgrade operation on another reset controller, and the first controller may also perform the upgrade operation on the first controller. It may be understood that, after the vehicle is powered off and then powered on, a communication link re-established after the controller is reset is usually normal. When the communication link is normal, the first controller re-upgrades the at least one controller, so that a probability of successfully upgrading all controllers can also be increased.

In addition, when the communication link is normal, a probability that the controller whose upgrade fails successfully responds to a diagnostic request may also be increased, so that a success rate of diagnosing the controller by another controller, server, or the like is increased, a reason for an upgrade exception can be analyzed more accurately based on a diagnostic result, and a success rate of resolving an upgrade exception problem is also increased. In this way, a success rate of re-upgrading the controller whose upgrade fails is improved.

It may be learned from the foregoing content that, in this embodiment of this application, after the vehicle is powered off and then powered on, the upgrade operation is re-performed on the at least one controller, so that a probability of successfully upgrading the controller can be increased, it is further ensured that a function or performance of the vehicle can be updated, and user experience is improved.

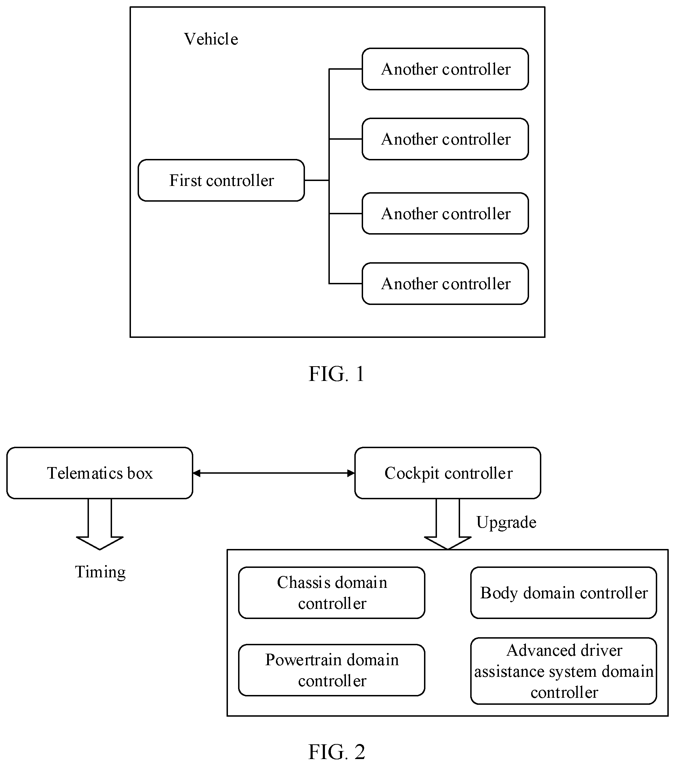

The foregoing method may be applied to the vehicle. Refer to FIG. 1. The vehicle may include the at least one controller. The at least one controller may further include the first controller and another controller. In addition, the first controller may be connected to or communicate with the another controller.

The first controller may be a controller that performs upgrade control on the at least one controller of the vehicle (for example, performs OTA on the vehicle), for example, may be a cockpit controller. The another controller may be a controller other than the cockpit controller, for example, a body domain controller, a chassis domain controller, a powertrain domain controller, an advanced driver assistance system domain controller, and a telematics box (telematics box, TBOX).

For example, as shown in FIG. 2, when communicating with the body domain controller, the chassis domain controller, the powertrain domain controller, the advanced driver assistance system domain controller, and the like, the cockpit controller may correspondingly control these controllers, for example, control these controllers to perform upgrade, and control these controllers to perform corresponding functions. When the cockpit controller communicates with the TBOX, timing duration of the TBOX may be set to control timing of the TBOX. In addition, after a timing operation of the TBOX ends, the TBOX may further communicate with the cockpit controller, to notify or control the cockpit controller to perform a corresponding operation.

When the first controller upgrades the at least one controller, if there is a controller that is not successfully upgraded in the upgrade process, the first controller may set the timing duration of the TBOX to perform wake-up timing, and control the TBOX to start the wake-up timing. In addition, the first controller may further control the vehicle to be powered off.

In this embodiment of this application, after the vehicle (or entire vehicle) is powered off, vehicle components (including the foregoing at least one controller) other than the TBOX are all in an off state or a sleep state. The TBOX remains powered on, to perform the foregoing wake-up timing operation.

When the wake-up timing operation of the TBOX ends, the TBOX may communicate with the first controller and a gateway through a controller local area network (controller area network, CAN) bus in the vehicle, to control the vehicle to be powered on, and wake up the first controller and the gateway. Then, the first controller wakes up the another controller of the vehicle through the gateway.

After the vehicle is powered on again, the controller in the off state during power-off may be reset. Different from a restarted controller, the reset controller may be restored to an initial state, may retain only a most basic function, or the like. Usually, after the controller is reset, data, configuration information, and the like in the controller may be cleared. In addition, after being reset, the controller may re-establish communication links with the another controller, the gateway, and the like.

In this embodiment of this application, after the vehicle is powered off and then powered on, the re-established communication link between the reset controller and the gateway is usually normal. It may also be understood that, in this embodiment of this application, a probability that the re-established communication link is normal is higher than a probability that a communication link present after the controller is restarted during a power-on period of the vehicle in the foregoing content is normal.

When the communication link is normal, the first controller re-upgrades the at least one controller, so that a probability of successfully upgrading all controllers can also be increased. Alternatively, when the communication link is normal, the controller whose upgrade fails may also successfully respond to the diagnostic request, so that the success rate of diagnosing the controller is increased, the reason for the upgrade exception can be analyzed more accurately based on the diagnostic result, and the success rate of resolving the upgrade exception problem is also increased. In this way, the success rate of re-upgrading the controller whose upgrade fails is improved. Therefore, in this embodiment of this application, after the vehicle is powered off and then powered on, the upgrade operation is re-performed on the at least one controller, so that a probability of successfully upgrading the controller can be increased, it is further ensured that the function or the performance of the vehicle can be updated, and user experience is improved.

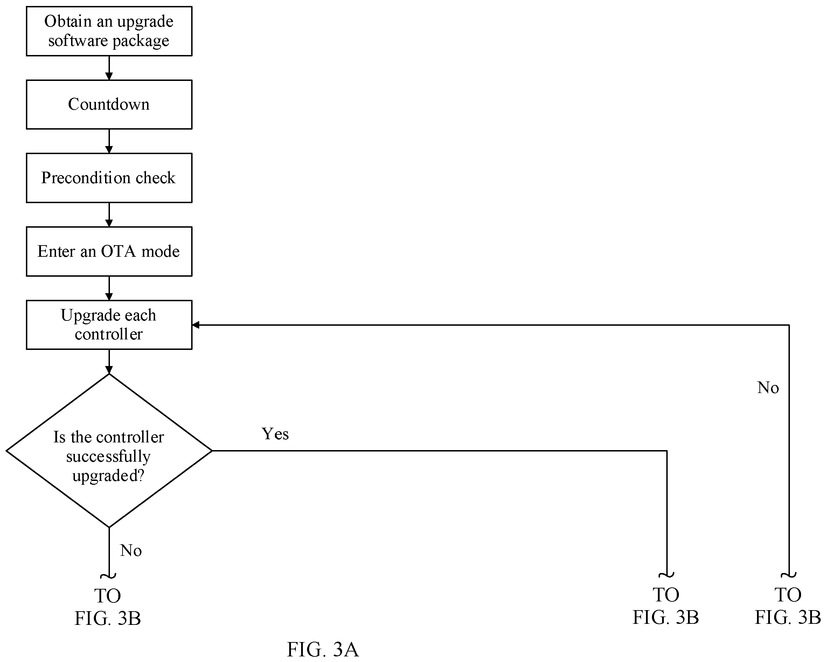

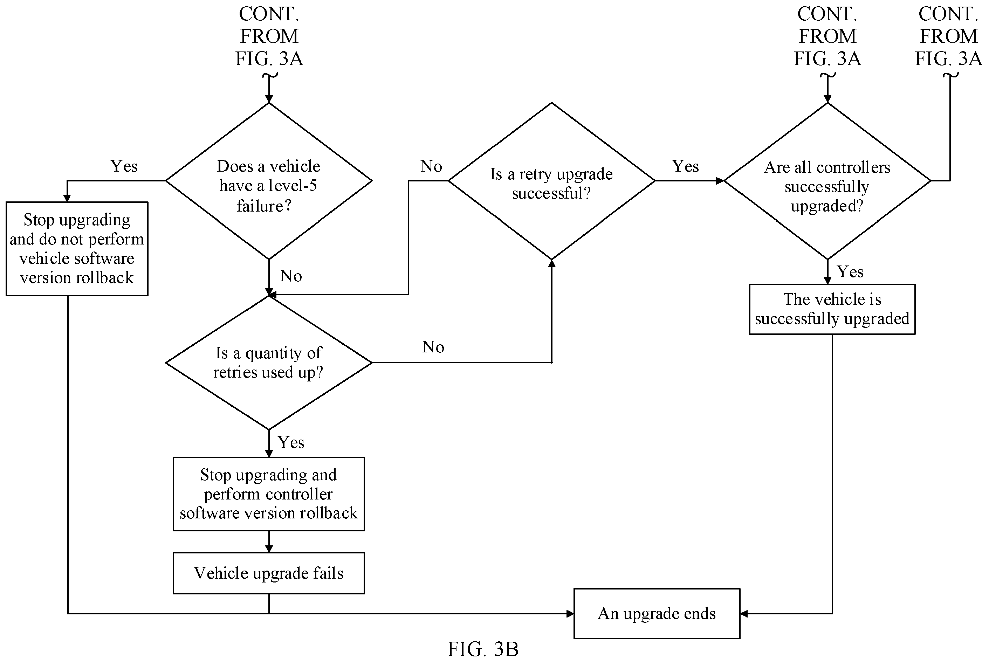

In some possible implementations, for a manner in which the first controller controls the at least one controller to upgrade (that is, an operation performed before the vehicle is powered off), refer to a manner shown in FIG. 3A and FIG. 3B.

Before the upgrade, the first controller may obtain an upgrade software package for upgrading the vehicle. For example, before performing the upgrade operation, the first controller may actively obtain the upgrade software package from a server. Alternatively, the first controller may passively receive the upgrade software package sent by the server, and prestore the upgrade software package locally, so that the upgrade software package can be directly used during the upgrade operation. The upgrade operation may be triggered by a user performing the upgrade operation on the vehicle, or may be automatically triggered after the first controller automatically detects that the vehicle meets an upgrade condition. This is not specifically limited in this embodiment of this application.

Before starting the upgrade and installation, the first controller may further perform countdown, and perform precondition check on the vehicle after the countdown ends. After the precondition check of the vehicle meets a requirement, the first controller controls the vehicle to enter an OTA mode, and starts to upgrade the at least one controller by using the obtained upgrade software package for upgrading the vehicle.

The foregoing precondition check includes: checking whether the vehicle is in a stationary state, whether the vehicle is started, whether a gear of the vehicle is a preset gear, and the like. In addition, that the precondition check of the vehicle meets the requirement includes one or more of the following: The vehicle is in the stationary state, the vehicle is not started, and the gear of the vehicle is the preset gear. Therefore, it is ensured that the vehicle is upgraded when the vehicle is in an appropriate state, so that impact on the driving of the user or use of the vehicle by the user in a process of upgrading the vehicle is reduced.

In addition, that the vehicle enters the OTA mode indicates that the vehicle cannot be operated. For example, the user cannot operate the vehicle, or cannot start the vehicle. Therefore, it is ensured that the vehicle is upgraded normally, an interruption caused by a user operation in the process of upgrading the vehicle is reduced, and occurrence of a failure in upgrading the vehicle is also reduced.

It may be understood that upgrading the at least one controller also includes upgrading the first controller and upgrading the TBOX. In addition, when the at least one controller is upgraded, the at least one controller may be sequentially upgraded, or may be synchronously upgraded. This is not specifically limited in this application.

Still refer to FIG. 3A and FIG. 3B. For one of the controllers, if the controller is successfully upgraded, the first controller continues to determine whether upgrades of all controllers are completed. If there is a controller whose upgrade is not completed, the first controller waits for the upgrades of all controllers to be completed. If the upgrades of all controllers are completed and succeed, the first controller presents the user with a prompt indicating that the vehicle is successfully upgraded, for example, displays content on a human-machine interface (human-machine interface, HMI) to prompt the user to experience a new version.

However, if the controller is not successfully upgraded, the first controller continues to determine whether the vehicle has a "level-5 failure". The "level-5 failure" indicates that the vehicle is in an unstartable state (that is, a power loss) and/or that the vehicle is in a state in which a vehicle door is not openable (that is, a key loss). If the vehicle has the "level-5 failure", the first controller cannot re-upgrade the controller whose upgrade fails, but stops the upgrade operation, does not perform vehicle software version rollback (return to a previous version for upgrading the vehicle), and notifies a skilled person or the user for handling.

That the vehicle cannot be started, that the vehicle door cannot be opened, and the like are considered serious vehicle problems. Such cases are highly likely to be caused by upgrading the vehicle, for example, a damaged upgrade software package or the upgrade exception. In this case, if the vehicle has the "level-5 failure", the first controller does not try to re-upgrade the vehicle, to avoid another upgrade failure, reduce a quantity of retries, and save time.

If the vehicle does not have the "level-5 failure", the first controller determines whether a quantity of retries corresponding to the controller whose upgrade fails is used up (whether the quantity of retries is equal to zero). If the quantity of retries of the controller is used up, the first controller cannot continue to perform upgrade retry on the controller. If the quantity of retries of the controller is not used up, the first controller continues to perform upgrade retry on the controller, and the quantity of retries is decreased by 1.

If the upgrade still fails when the quantity of retries of the controller whose upgrade fails is used up, the first controller controls the controller to perform software version rollback (return to the previous version for upgrading the controller), and presents a prompt indicating that the vehicle fails to be upgraded, for example, displays prompt information on the HMI.

It may be understood that the "level-5 failure" in the process of upgrading the vehicle refers to a case in which the upgrade fails or an expected objective cannot be achieved due to a severe and uncontrollable problem that occurs in the process of upgrading the vehicle. The foregoing descriptions of the "level-5 failure" are merely an example for description. In some other possible implementations, the "level-5 failure" may further include upgrade software package incompatibility, a power interruption in the upgrade process, the damaged upgrade software package, an error or an exception that occurs in the upgrade process, a failure to roll back to the previous version, and the like. A case of the "level-5 failure" is not specifically limited in this embodiment of this application.

It can be learned from the foregoing content that, for a vehicle upgrade operation in this embodiment of this application, the first controller may implement functions such as remote upgrade control, remote upgrade condition detection, and remote upgrade display, and the TBOX may implement a timing function. The remote upgrade control indicates that the first controller upgrades the at least one controller of the vehicle. The remote upgrade condition detection indicates that the first controller determines whether a precondition of the vehicle meets a requirement, whether the "level-5 failure" occurs, whether the quantity of retries is used up, whether a vehicle status meets a requirement, and the like. The remote upgrade display indicates that the first controller may display corresponding prompt information after each controller is successfully upgraded, or display corresponding prompt information after an upgrade of a specific controller fails.

Based on communication between the first controller and the TBOX and a function of controlling all controllers of the vehicle by the first controller, the vehicle may be controlled to be powered off and then powered on, so that the controller is reset after being powered on again, to improve connectivity of the communication link between the controller and the gateway, reduce a link exception, and reduce an exception of communication between the controller and another controller or server. Therefore, after the controller is reset, a probability of successfully upgrading the controller is increased, it is further ensured that the function or the performance of the vehicle can be updated, and user experience is improved.

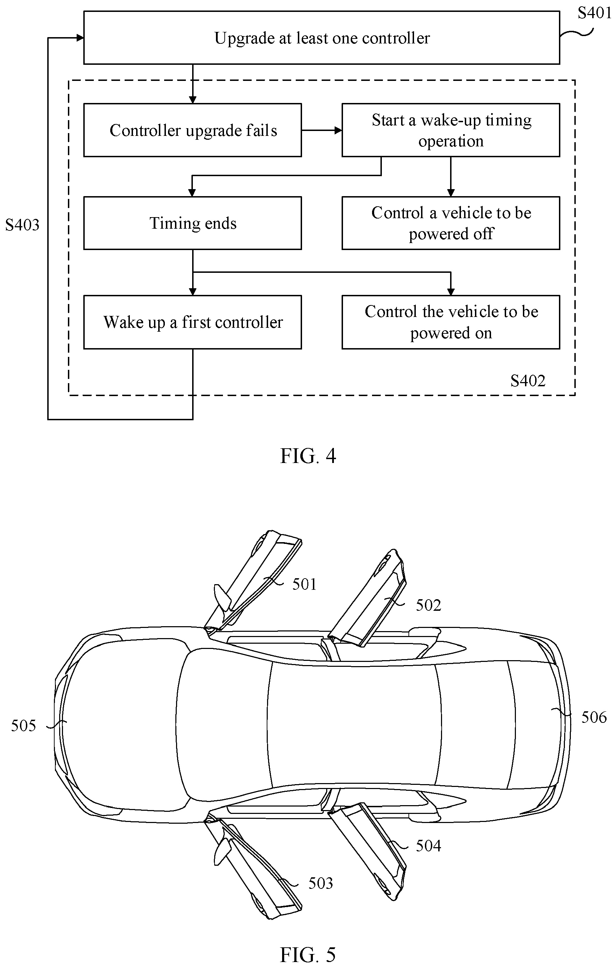

An example in which the method for upgrading the vehicle in this embodiment of this application is performed based on the process shown in FIG. 3A and FIG. 3B are used. Refer to FIG. 4. The method for upgrading the vehicle may include the following steps S401 to S403.

S401: The first controller upgrades the at least one controller.

For a manner in which the first controller upgrades the at least one controller, refer to the process shown in FIG. 3A and FIG. 3B.

In addition, in some possible implementations, when the vehicle meets a first preset condition, the first controller may further separately upgrade the at least one controller based on the obtained upgrade software package for upgrading the vehicle. In addition, when the at least one controller is successfully upgraded separately, the first controller presents information indicating a success in upgrading the vehicle. The first preset condition includes one or more of the following: The vehicle is in the stationary state, the vehicle is not started, and the gear of the vehicle is the preset gear. Alternatively, the first preset condition may be the foregoing precondition. In this way, it is ensured that the vehicle is upgraded when the vehicle is in the appropriate state, so that the impact on the driving of the user or use of the vehicle by the user in the process of upgrading the vehicle is reduced. The first preset condition is not specifically limited in this embodiment of this application.

In some possible implementations, for an upgrade of one controller, if the upgrade of the controller fails and the vehicle meets a second preset condition, the first controller obtains a second quantity of retries of an upgrade operation on the controller; and when the second quantity of retries is greater than zero, the first controller re-upgrades the controller; or when the second quantity of retries is equal to zero, the first controller determines that the upgrade of the controller fails.

The second preset condition includes: the vehicle is in the unstartable state and/or the vehicle is in the state in which the vehicle door is not openable. Alternatively, the second preset condition may include the foregoing "level-5 failure", to prevent the vehicle from being re-upgraded when a serious fault or case occurs in the vehicle, reduce the quantity of retries, and save time.

S402: When the upgrade of the controller fails in the upgrade process, the first controller starts a wake-up timing operation and controls the vehicle to be powered off.

The wake-up timing operation is used for timing, controlling the vehicle to be powered on when the timing ends, and waking up the first controller. In addition, timing duration in the wake-up timing operation may be set to 5 minutes to 10 minutes, for example, 5 minutes, 8 minutes, or 10 minutes.

In some possible implementations, the first controller may control the TBOX to start the wake-up timing operation. In addition, when wake-up timing ends, the TBOX controls the vehicle to be powered on and wakes up the first controller.

In some possible implementations, before starting the wake-up timing operation, the first controller may further determine the vehicle status. In this case, when the vehicle status meets the requirement, the wake-up timing operation is started, to ensure that the vehicle is normally re-upgraded subsequently.

For example, when the upgrade of the controller fails in the upgrade process, the first controller determines the vehicle status. The vehicle status includes an armed state and a disarmed state. The armed state indicates a state in which the vehicle is fully locked or that the vehicle is in a security state, to ensure safety of a person or an object in the vehicle. In addition, in the armed state, "four doors and two covers" of the vehicle are all in a locked state. Refer to FIG. 5. The "four doors" represent all vehicle doors of the vehicle, for example, a vehicle door 501, a vehicle door 502, a vehicle door 503, and a vehicle door 504, and the "two covers" represent front and rear covers of the vehicle, for example, an engine hood 505 and a trunk lid 506. The disarmed state is opposite to the armed state. To be specific, the disarmed state indicates that the vehicle is in an unlocked state or the security state is deactivated, and at least one of the "four doors and two covers" of the vehicle is in an unlocked state.

When the vehicle is in the armed state, the first controller continues to start the wake-up timing operation and controls the vehicle to be powered off. In this way, because the armed state indicates that the vehicle is locked, when the vehicle is locked, it is highly likely that the vehicle is not started, and no user uses a central display screen inside the vehicle and operates a component of the vehicle. In this case, when the vehicle is in the armed state, the wake-up timing is started, and the re-upgrade is performed after the timing ends, so that upgrade interruptions caused by vehicle startup, a user operation, and the like can be reduced, and it can be ensured that the vehicle is smoothly upgraded.

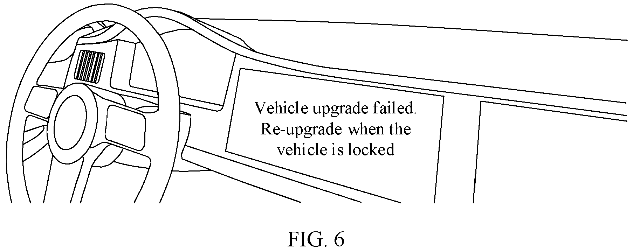

If the vehicle is in the disarmed state, the first controller presents information indicating a failure in upgrading the vehicle. For example, as shown in FIG. 6, the first controller may control a central display screen 601 that displays the HMI to display prompt information such as "Vehicle upgrade failed. Re-upgrade when the vehicle is locked". The vehicle may be started or operated at any time in the disarmed state. Therefore, in the disarmed state, the first controller does not re-upgrade the vehicle, so that an upgrade interruption is reduced, and user experience is improved.

In some possible implementations, in response to the user operation, the vehicle in the armed state may be further switched to the disarmed state. When the vehicle is in the disarmed state, an ongoing vehicle upgrade operation may be forcibly terminated, and the first controller may further present the information indicating the failure in upgrading the vehicle, to prompt the user with the failure in upgrading the vehicle, so that the user can handle the failure independently or seek technical assistance.

Alternatively, in some other possible implementations, after the vehicle is switched from the armed state to the disarmed state, if the current wake-up timing operation does not end, the TBOX may directly wake up the first controller. In this case, the first controller may also present the information indicating the failure in upgrading the vehicle, and does not continue to perform the vehicle upgrade operation.

In this implementation, because the vehicle status changes, it cannot be ensured that the vehicle can be smoothly upgraded without interruption. Therefore, the first controller terminates the vehicle upgrade operation.

For a manner in which the first controller presents the information indicating the failure in upgrading the vehicle, refer to FIG. 6. Details are not described herein again.

In some other possible implementations, when the vehicle is in the armed state, the first controller may further obtain a first quantity of retries of an upgrade operation. The first quantity of retries indicates a quantity of upgrade operations re-performed on the at least one controller, or indicates that a quantity of times of re-upgrading the vehicle. When the first quantity of retries is greater than zero, the first controller starts the wake-up timing operation and controls the vehicle to be powered off. In addition, when the first quantity of retries is zero, the first controller presents the information indicating the failure in upgrading the vehicle.

If the first quantity of retries is not zero, it indicates that a quantity of retries for upgrading the at least one controller (or referred to as upgrading the vehicle) is not used up. In this case, an upgrade operation may be retried, to increase a probability of successfully upgrading the controller.

If the first quantity of retries is zero, it indicates that the quantity of retries for upgrading the at least one controller (or referred to as upgrading the vehicle) is used up. In this case, to avoid wasting unnecessary time caused by repeated retries, when the quantity of retries is used up, no retry is performed.

S403: The first controller re-upgrades the at least one controller.

In some possible implementations, after the vehicle is powered on again and woken up, the first controller may first wake up another controller that is not woken up. In this way, an objective of re-upgrading the at least one controller is further achieved.

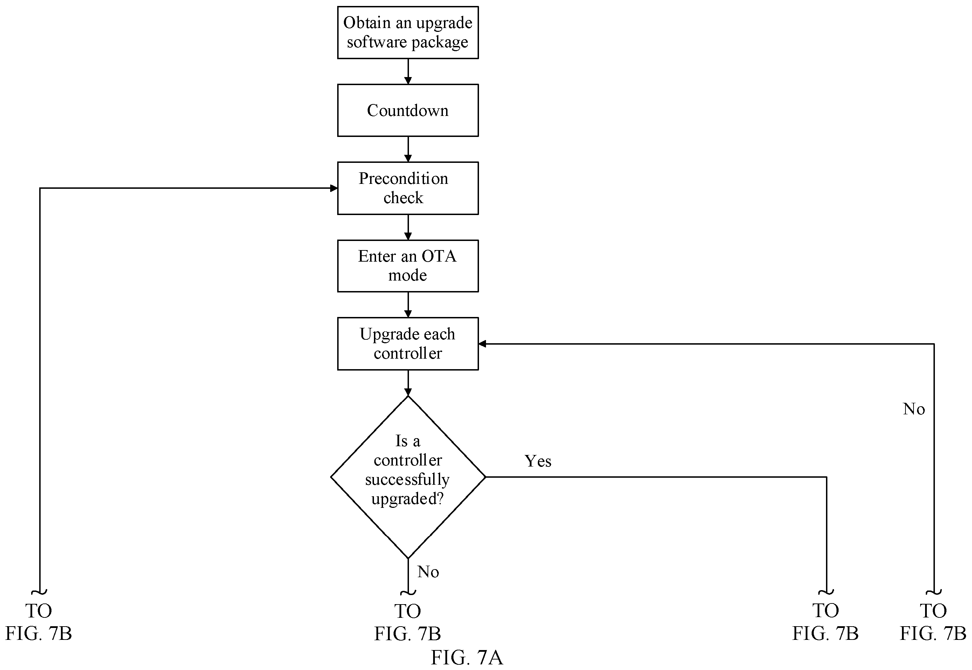

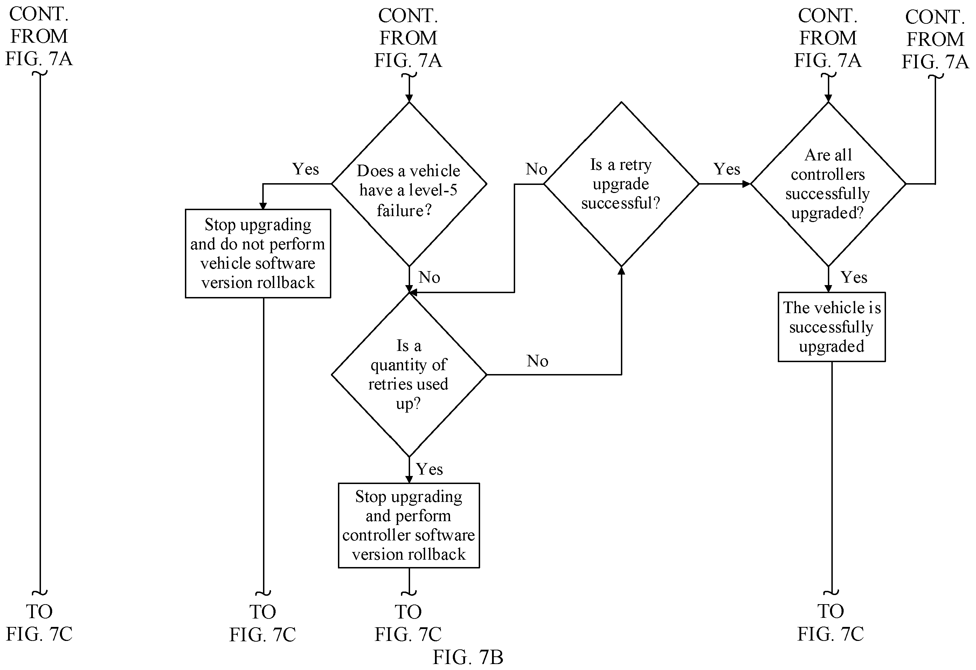

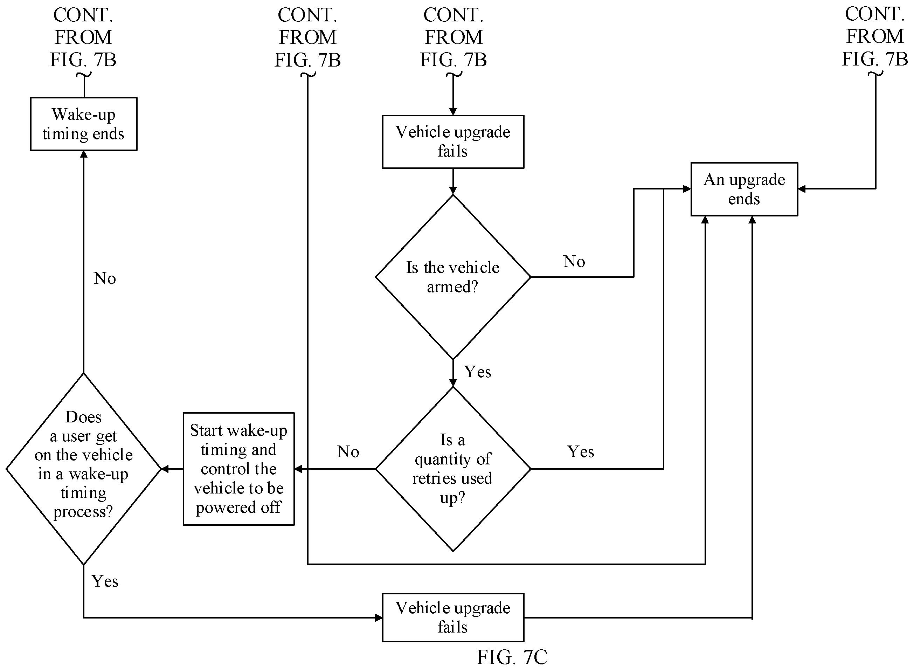

For example, based on the content in FIG. 3A and FIG. 3B and S401 to S403, the foregoing method for upgrading the vehicle may be further shown in FIG. 7A to FIG. 7C. A 1^{st} failure in upgrading the vehicle in FIG. 7A to FIG. 7C indicates that there is a controller failing to be upgraded in the foregoing embodiment, or indicates the failure in upgrading the vehicle in FIG. 3A and FIG. 3B. In this case, the first controller continues to determine whether the vehicle is armed (that is, determine the vehicle status). If the vehicle is armed (that is, in the armed state), the first controller continues to determine whether the quantity of retries is used up. The quantity of retries herein is the quantity of upgrades of the vehicle (that is, the foregoing first quantity of retries). If the quantity of retries is not used up, the wake-up timing is started and the vehicle is controlled to be powered off. In addition, in some possible implementations, the first quantity of retries may also indicate a quantity of full-process retries.

In a process of the wake-up timing operation, if no user gets on the vehicle, the first controller is woken up after the wake-up timing ends, and after being woken up, the first controller re-performs the precondition check on the vehicle. In this case, the vehicle is re-upgraded, and the first quantity of retries is decreased by 1. In addition, in the process of the wake-up timing operation, if the user gets on the vehicle, it indicates that the armed state of the vehicle is deactivated, and the wake-up timing is interrupted. In this case, the first controller cannot continue to retry the process of upgrading the vehicle, and therefore, determines that the vehicle upgrade fails (that is, a 2^{nd} failure in upgrading the vehicle in FIG. 7A to FIG. 7C).

In addition, as shown in FIG. 7A to FIG. 7C, if the vehicle is not armed or the first quantity of retries is used up, it indicates the failure in upgrading the vehicle, or an upgrade of the at least one controller still fails. In this case, the first controller may directly end the current upgrade operation, and does not try to upgrade the vehicle again. In addition, before determining whether the vehicle is armed, the first controller has controlled the controller whose upgrade fails to perform the software version rollback. In this case, when the vehicle is not armed or the first quantity of retries is used up, the upgrade operation is ended, so that normal use of a controller whose previous upgrade fails is not affected, and a function of the vehicle is not affected.

With reference to the content of the foregoing embodiment and the content of FIG. 7A to FIG. 7C, it may be learned that, in the method for upgrading the vehicle provided in this embodiment of this application, when the upgrade of the controller fails in the process of upgrading the vehicle, the first controller may control the vehicle to be powered off, to reset the controller of the vehicle. After the vehicle is powered on again, the reset first controller re-performs the upgrade operation on another reset controller.

It may be understood that, when the vehicle is powered off, controllers that are in the off state or the sleep state may all be reset after the vehicle is powered on. After the controllers are reset, a re-established communication link is usually normal. When the communication link is normal, the first controller re-upgrades the at least one controller, so that the probability of successfully upgrading all controllers can also be increased. Alternatively, when the communication link is normal, the controller whose upgrade fails may also successfully respond to the diagnostic request, so that the success rate of diagnosing the controller is increased, the reason for the upgrade exception can be analyzed more accurately based on the diagnostic result, and the success rate of resolving the upgrade exception problem is also increased. In this way, the success rate of re-upgrading the controller whose upgrade fails is improved.

In addition, when the communication link is normal, the probability that the controller whose upgrade fails successfully responds to the diagnostic request may also be increased, so that the success rate of diagnosing the controller by the another controller, server, or the like is increased, the reason for the upgrade exception can be analyzed more accurately based on the diagnostic result, and the success rate of resolving the upgrade exception problem is also increased. In this way, the success rate of re-upgrading the controller whose upgrade fails is improved.

It may be learned from the foregoing content that, in this embodiment of this application, after the vehicle is powered off and then powered on, the upgrade operation is re-performed on the at least one controller, so that the probability of successfully upgrading the controller can be increased, for example, the success rate may be increased by 2% to 3% or the success rate may be increased by 0.3% to 0.8%, and therefore, it is further ensured that the function or the performance of the vehicle can be updated, and user experience is improved.

In some solutions, a plurality of embodiments of this application may be combined, and a combined solution is implemented. Optionally, some operations in procedures of the method embodiments are combined as required, and/or a sequence of some operations is changed as required. In addition, an execution sequence of steps of procedures is merely an example, and does not constitute a limitation on an execution sequence between the steps. The steps may alternatively be performed in another execution sequence. It is not intended to indicate that the execution sequence is an only sequence in which these operations may be performed. A person of ordinary skill in the art may learn various manners of re-ordering the operations described in this embodiment of this application. In addition, it should be noted that process details in a specific embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, the vehicle includes corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on specific applications and design constraints of the technical solutions. A person skilled in the art may use different methods to implement the described functions for each specific application with reference to embodiments. However, it should not be considered that the implementation goes beyond the scope of this application.

In embodiments of this application, the vehicle may be divided into functional modules based on the foregoing method examples. For example, each functional module may be obtained through division based on each corresponding function, or two or more functions may be integrated into one processing module. The integrated module may be implemented in a form of hardware. It should be noted that, in embodiments of this application, module division is an example, and is merely logical function division. During actual implementation, another division manner may be used.

An embodiment of this application further provides a vehicle. The vehicle may include the at least one controller in the foregoing embodiment, for example, a first controller, a TBOX, and another controller. The first controller may be a cockpit controller, and the another controller may be a functional domain controller other than the cockpit controller, for example, a chassis domain controller, an advanced driver assistance system domain controller, a body domain controller, or a powertrain domain controller. In addition, for functions performed by the first controller, the TBOX, the another controller, and the like, refer to the content in the foregoing embodiments. Details are not described herein again.

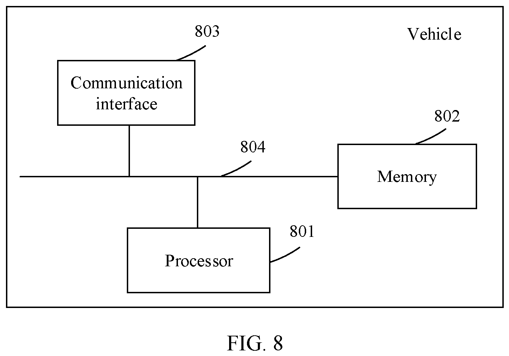

In some other possible embodiments, as shown in FIG. 8, the vehicle provided in this embodiment of this application may further include one or more processors 801, a memory 802, and a communication interface 803.

The memory 802 and the communication interface 803 are coupled to the processor 801. For example, the memory 802 and the communication interface 803 may be coupled to the processor 801 through a bus 804.

The communication interface 803 is configured to perform data transmission with another device. The memory 802 stores computer program code. The computer program code includes computer instructions. When the computer instructions are executed by the processor 801, the vehicle is enabled to perform a method for upgrading the vehicle in embodiments of this application.

The processor 801 may be a processor or a controller, for example, a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, any hardware component, or a combination thereof. The processor may implement or execute various example logical blocks, modules, and circuits described with reference to content of the present disclosure. Alternatively, the processor may be a combination of processors implementing a computing function, for example, a combination of one or more microprocessors, or a combination of the DSP and a microprocessor.

The bus 804 may be a peripheral component interconnect (Peripheral Component Interconnect, PCI) bus, an extended industry standard architecture (Extended Industry Standard Architecture, EISA) bus, or the like. The bus 804 may be classified into an address bus, a data bus, a control bus, and the like. For ease of representation, only one bold line is used in FIG. 8 to represent the bus, but this does not mean that there is only one bus or only one type of bus.

An embodiment of this application further provides a computer-readable storage medium. The computer-readable storage medium includes computer instructions. When the computer instructions are run on a vehicle, the vehicle is enabled to perform related method steps in the foregoing method embodiment.

An embodiment of this application further provides a computer program product. When the computer program product runs on a vehicle, the vehicle is enabled to perform related method steps in the foregoing method embodiment.

The vehicle, the computer storage medium, or the computer program product provided in this application is configured to perform corresponding methods provided in the foregoing descriptions. Therefore, for a beneficial effect that can be achieved by the vehicle, the computer storage medium, or the computer program product, refer to the beneficial effects in the corresponding methods provided in the foregoing descriptions. Details are not described herein again.

The foregoing descriptions about the implementations allow a person skilled in the art to clearly understand that, for the purpose of convenient and brief description, division of the foregoing functional modules is used as an example for illustration. During actual application, the foregoing functions may be allocated to different functional modules for implementation as required. In other words, an inner structure of an apparatus is divided into different functional modules to implement all or a part of the functions described above.

In the several embodiments provided in this application, it should be understood that the disclosed apparatus and method may be implemented in other manners. For example, the described apparatus embodiments are merely examples. For example, division into modules or units is merely logical function division and may be other division during actual implementation. For example, a plurality of units or components may be combined or integrated into another apparatus, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate components may or may not be physically separate, and components displayed as units may be one or more physical units, and may be located in one place, or may be distributed on different places. A part or all of the units may be selected according to actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of software functional unit.

When the integrated unit is implemented in the form of software functional unit and sold or used as an independent product, the integrated unit may be stored in a readable storage medium. Based on such an understanding, the technical solutions in embodiments of this application essentially, or a part making a contribution, or all or a part of the technical solutions may be implemented in a form of software product. The software product is stored in a storage medium and includes several instructions for instructing a device (which may be a single-chip microcomputer, a chip, or the like) or a processor (processor) to perform all or a part of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for upgrading a vehicle, applied to a first controller of the vehicle, wherein the vehicle comprises at least one controller that comprises the first controller, and the method comprises:
upgrading the at least one controller;
starting a wake-up timing operation and controlling the vehicle to be powered off, when an upgrade of a controller fails in an upgrade process, wherein the wake-up timing operation is used for timing, controlling the vehicle to be powered on when the timing ends, and waking up the first controller; and
re-upgrading the at least one controller.

2. The method according to claim 1, wherein the starting the wake-up timing operation and controlling the vehicle to be powered off, when the upgrade of the controller fails in the upgrade process comprises:
determining a vehicle status when the upgrade of the controller fails in the upgrade process; and
starting the wake-up timing operation and controlling the vehicle to be powered off, when the vehicle is in an armed state.

3. The method according to claim 2, wherein after determining the vehicle status when the upgrade of the controller fails in the upgrade process, the method further comprises:
presenting information indicating a failure in upgrading the vehicle, when the vehicle is in a disarmed state.

4. The method according to claim 3, wherein the method further comprises:
in a process of performing the wake-up timing operation, if the vehicle is switched from the armed state to the disarmed state, presenting the information indicating the failure in upgrading the vehicle.

5. The method according to any one of claims 2 to 4, wherein the starting the wake-up timing operation and controlling the vehicle to be powered off, when the vehicle is in the armed state comprises:
obtaining a first quantity of retries of an upgrade operation when the vehicle is in the armed state; and
when the first quantity of retries is greater than zero, starting the wake-up timing operation and controlling the vehicle to be powered off, wherein the first quantity of retries indicates a quantity of upgrade operations re-performed on the at least one controller.

6. The method according to claim 5, wherein the method further comprises:
when the first quantity of retries is zero, presenting the information indicating the failure in upgrading the vehicle.

7. The method according to any one of claims 1 to 6, wherein the upgrading the at least one controller comprises:
when the vehicle meets a first preset condition, separately upgrading the at least one controller based on an obtained upgrade software package for upgrading the vehicle, wherein the first preset condition comprises one or more of the following: the vehicle is in a stationary state, the vehicle is not started, and a gear of the vehicle is a preset gear; and
when the at least one controller is successfully upgraded separately, presenting information indicating a success in upgrading the vehicle.

8. The method according to claim 7, wherein the separately upgrading the at least one controller based on the obtained upgrade software package for upgrading the vehicle comprises:
for an upgrade of one controller, when the upgrade of the controller fails and the vehicle meets a second preset condition, obtaining a second quantity of retries of an upgrade operation on the controller, wherein the second preset condition comprises: the vehicle is in an unstartable state and/or the vehicle is in a state in which a vehicle door is not openable; and
re-upgrading the controller when the second quantity of retries is greater than zero; or
when the second quantity of retries is equal to zero, determining that the upgrade of the controller fails.

9. A vehicle, wherein the vehicle comprises at least one controller that comprises a first controller;
the first controller is configured to: upgrade the at least one controller; and when an upgrade of a controller fails in an upgrade process, control a telematics box to start a wake-up timing operation and control the vehicle to be powered off, wherein the wake-up timing operation is used for timing, controlling the vehicle to be powered on when the timing ends, and waking up the first controller; and
the first controller is further configured to re-upgrade the at least one controller.

10. A vehicle, comprising a memory and one or more controllers, wherein the memory is coupled to the controller, the memory stores computer program code, the computer program code comprises computer instructions, and when the computer instructions are executed by the controller, the vehicle is enabled to perform the method for upgrading the vehicle according to any one of claims 1 to 8.

11. A computer-readable storage medium, comprising computer instructions, wherein when the computer instructions are run on a vehicle, the vehicle is enabled to perform the method for upgrading the vehicle according to any one of claims 1 to 8.
